# EUROPEAN PATENT APPLICATION

(11) **EP 2 634 506 A1**
(43) Date of publication of application: **04.09.2013**
(21) Application number: 12157825.6
(22) Date of filing: 02.03.2012
(51) Int. Cl.: F24J 2/46, F24J 2/54

(54) **Electricity generating apparatus using solar power**

(71) Applicant: Fung Gin Da Energy Science and Technology Co., Ltd, Neipu Township, Pingtung County 912 (TW)
(72) Inventor: Chung, Chun-Neng, Neipu Township, Pingtung County (TW)
(74) Representative: Gille Hrabal

(57) **Abstract**

An electricity generating apparatus includes a solar power collecting unit (2), a supporting device (5) operable to support movably the solar power collecting unit (2) on a supporting surface (100), a control module (6) for controlling the supporting device (5) based on a solar radiating direction such that the solar power collecting unit (2) is moved to face sunlight, and a cleaning device (7) controlled by the control module (6) for cleaning the solar power collecting unit (2). The cleaning device (7) includes a water spraying pipe (72), a water pump (74), an air spraying pipe (73), and an air pump (75).

## Description

The invention relates to an electricity generating apparatus, and more particularly to an electricity generating apparatus using solar power.

U.S. Patent Application Publication No. 2011/0253214 discloses an electricity generating device using solar power. The electricity generating device includes a supporting device for supporting movably a solar power collecting unit that includes a solar power collecting plate carried on a carrier for converting solar power into electrical energy, and a condensing unit mounted on the carrier and disposed above the solar power collecting plate. The supporting device includes a disk member mounted rotatably on a top side of a base and driven by a drive unit in the base to rotate relative to the base, and a telescopic rod member and two upright supporting rods interconnecting the carrier and the disk member. A control module controls the drive unit and the telescopic rod member based on a solar radiating direction such that the solar power collecting plate is moved to face sunlight.

Since the electricity generating apparatus is used outdoors, it easily gets dirty and stained, which may result in a lower solar power collecting efficiency if not cleaned.

Therefore, an object of the present invention is to provide an electricity generating apparatus that uses solar power and that has a self-cleaning function.

According to the present invention, an electricity generating apparatus using solar power includes a solar power collecting unit, a supporting device, a control module, and a cleaning device.

The solar power collecting unit includes a carrier, a solar power collecting plate carried on the carrier for converting solar power into electrical energy, and a condensing unit mounted on the carrier and disposed above the solar power collecting plate for concentrating sunlight onto the solar power collecting plate.

The supporting device is operable to support movably the solar power collecting unit on a supporting surface, and includes a base, a disk member, a drive unit, a telescopic rod member, and two upright supporting rods spaced apart from each other. The base is adapted to be disposed on the supporting surface, and has a top side. The disk member is mounted rotatably on the top side of the base and is rotatable relative to the base about a rotation axis of the disk member that is transverse to the supporting surface. The drive unit is mounted to the base for driving rotation of the disk member about the rotation axis. The telescopic rodmember has opposite upper and lower pivot ends connected pivotally and respectively to the carrier and the disk member. Each of the supporting rods has a lower end connected to the disk member, and an upper end opposite to the lower end and connected pivotally to the carrier.

The control module includes a sensing unit for generating a sensing output indicating a solar radiating direction, and a controller coupled to the sensing unit, the drive unit and the telescopic rod member. The controller receives the sensing output from the sensing unit, and is operable to control the drive unit and the telescopic rod member based on the sensing output received thereby such that the disk member is driven to rotate by the drive unit and the telescopic rod member is adjusted in length to move the solar power collecting plate to face sunlight.

The cleaning device includes a water spraying pipe disposed to extend upright relative to the base, a water pump coupled to the water spraying pipe and operable to feed water to the water spraying pipe, an air spraying pipe disposed to extend upright relative to the base and spaced apart from the water spraying pipe, and an air pump coupled to the air spraying pipe and operable to feed air to the air spraying pipe. The water pump and the air pump are coupled electrically to and controlled by the controller to spray water and air onto the solar power collecting unit for cleaning the solar power collecting unit.

Other features and advantages of the present invention will become apparent in the following detailed description of the preferred embodiments with reference to the accompanying drawings, of which:
Figure 1 is a perspective view showing the first preferred embodiment of an electricity generating apparatus using solar power according to the present invention;
Figure 2 is a schematic partly sectional view to illustrate a drive unit of the first preferred embodiment;
Figure 3 is a perspective view showing a solar power collecting unit of the first preferred embodiment;
Figure 4 is a fragmentary, schematic partly sectional view showing the solar power collecting unit of the first preferred embodiment;
Figure 5 is a schematic circuit block diagram of the first preferred embodiment;
Figure 6 is a fragmentary, schematic partly sectional view illustrating rotation of a condenser lens of the solar power collecting unit of the first preferred embodiment;

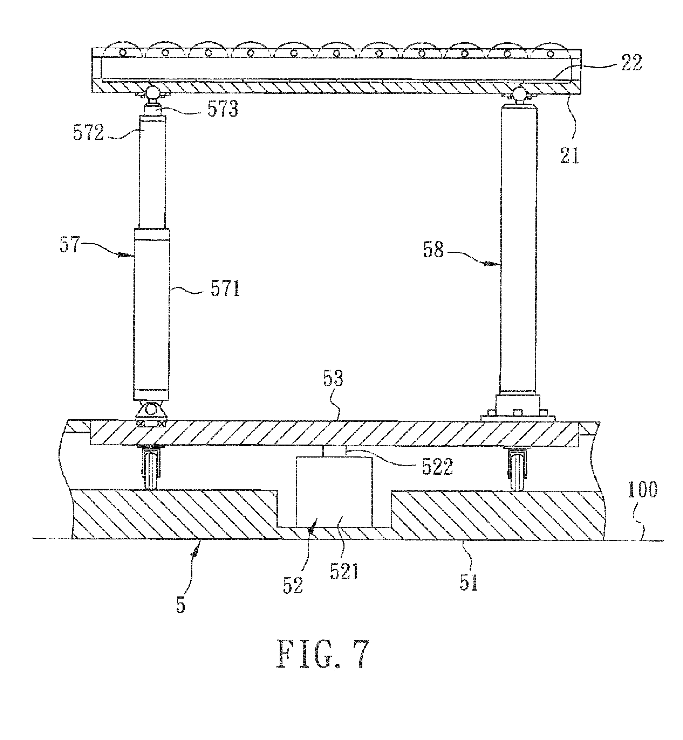

Figure 7 is a fragmentary schematic sectional view showing the first preferred embodiment in a state of use;
Figure 8 is a fragmentary schematic sectional view showing the first preferred embodiment in another state of use;
Figure 9 is a schematic partly sectional view showing a cleaning operation of the first preferred embodiment;
Figure 10 is a schematic partly sectional view showing a drying operation of the first preferred embodiment;
Figure 11 is a perspective view showing the second preferred embodiment of an electricity generating apparatus using solar power according to the present invention;
Figure 12 is a schematic side view of the second preferred embodiment; and
Figure 13 is a schematic circuit block diagram of the second preferred embodiment.

Before the present invention is described in greater detail, it should be noted that like elements are denoted by the same reference numerals throughout the disclosure.

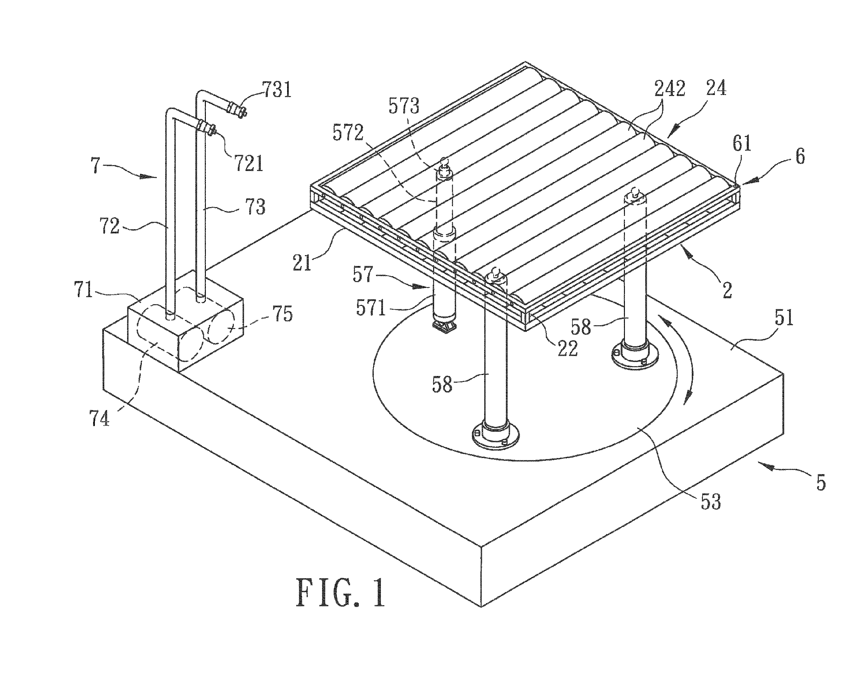

Referring to Figures 1 to 5, the first preferred embodiment of an electricity generating apparatus using solar power according to the present invention is shown to include a solar power collecting unit 2, a supporting device 5, a control module 6 and a cleaning device 7.

The solar power collecting unit 2 includes a carrier 21, a solar power collecting plate 22, an energy storing member 23, and a condensing unit 24.

The solar power collecting plate 22, which is built from solar panels, is carried on the carrier 21 for converting solar power into electrical energy.

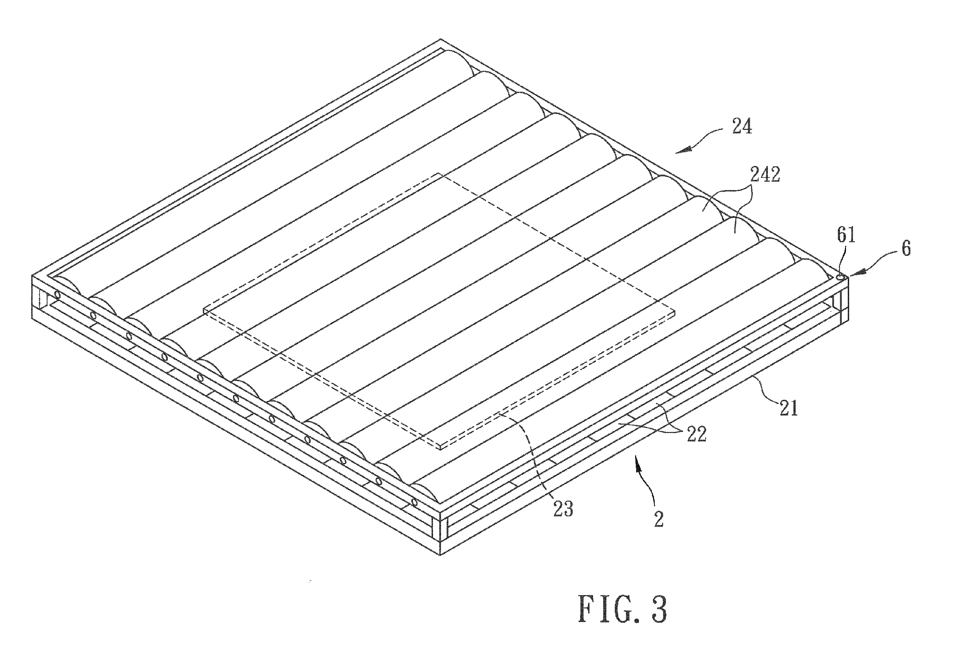

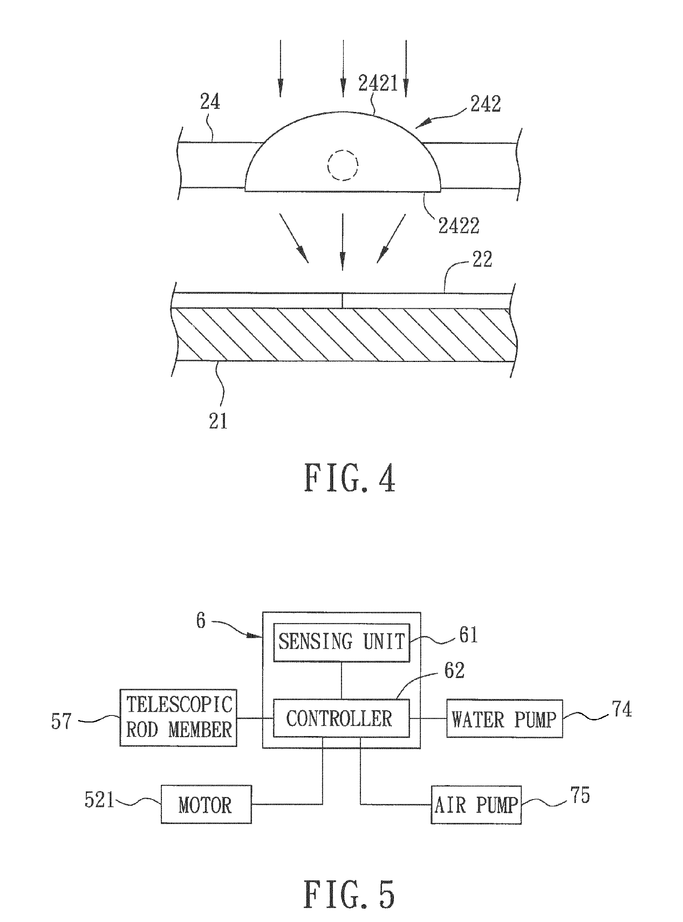

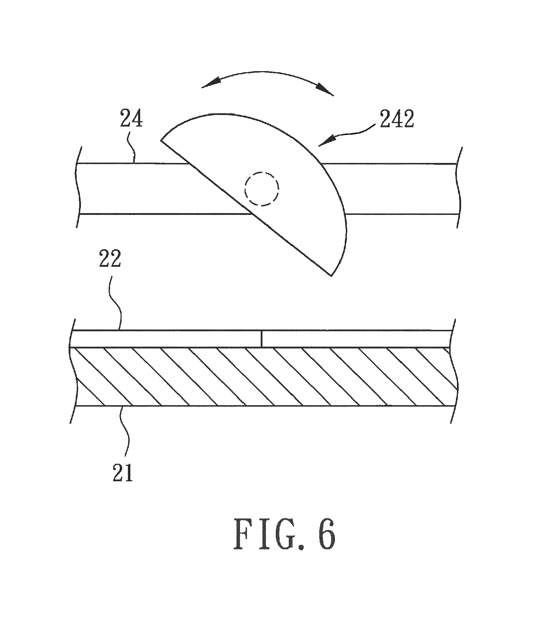

The condensing unit 24 is mounted on the carrier 21 and includes a plurality of condenser lenses 242 disposed above the solar power collecting plate 22 for concentrating sunlight onto the solar power collecting plate 22 (see Figure 4). The condenser lenses 242 extend in a first direction, and are arranged in a second direction transverse to the first direction, as shown in Figure 3. The condenser lenses 242 are mounted rotatably on the carrier 21, i.e., each condenser lens 242 is rotatable relative to the carrier 21, as shown in Figure 6. In this embodiment, each condenser lens 242 has a convex surface 2421, and a flat surface 2422 opposite to the convex surface 2421 and facing the solar power collecting plate 22, as shown in Figure 4.

The energy storing member 23 is connected electrically to the solar power collecting plate 22 for storing electrical energy therefrom. In this embodiment, the energy storing member 23 is mounted in the carrier 21, and is disposed below the solar power collecting plate 22, as shown in Figure 3.

The supporting device 5 is operable to support movably the solar power collecting unit 2 on a supporting surface 100. The supporting device 5 includes a base 51, a disk member 53, a drive unit 52, a telescopic rod member 57, and two upright supporting rods 58.

In this embodiment, the base 51 is adapted to be disposed on the supporting surface 100 and has a top side.

The disk member 53 is mounted rotatably on the top side of the base 51 such that the disk member 53 is rotatable relative to the base 51 about a rotation axis of the disk member 53 that s transverse to the supporting surface 100.

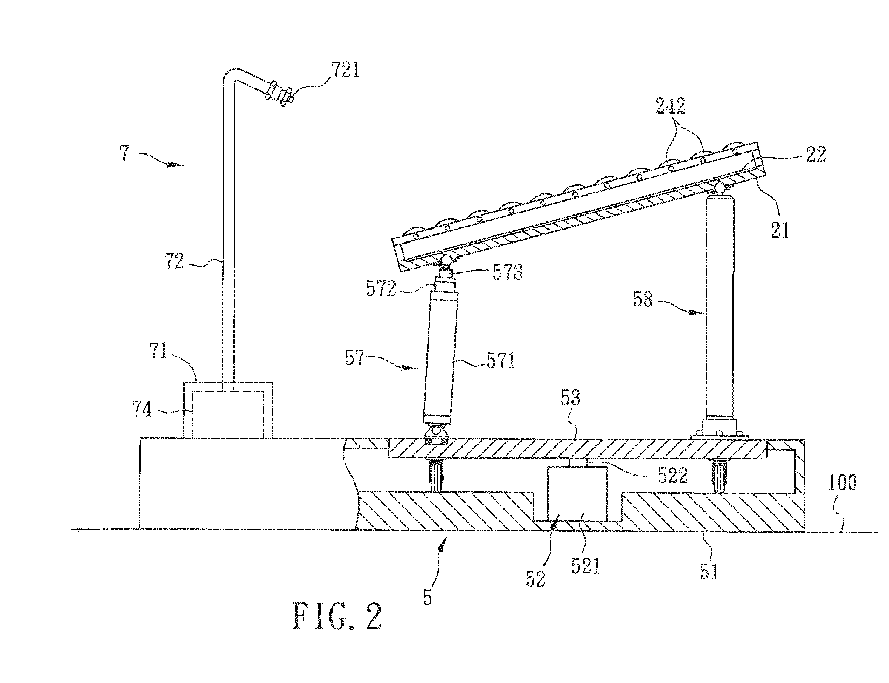

The drive unit 52 is mounted to the base 51 for driving rotation of the disk member 53 about the rotation axis. In this embodiment, as shown in Figure 2, the drive unit 52 includes a motor 521 that is disposed in the base 51 and that has a drive shaft 522 extending along the rotation axis and coupled to the disk member 53 such that the disk member 53 is rotated by the drive shaft 522 of the motor 521.

In this embodiment, the telescopic rod member 57 is in the form of a fluid cylinder, such as a hydraulic cylinder or a pneumatic cylinder. The telescopic rod member 57 has a cylinder body 571, and a piston rod 572 coupled movably to the cylinder body 571. The cylinder body 571 has a lower pivot end connected pivotally to the disk member 53. The piston rod 572 has an upper pivot end 573 connected pivotally to the carrier 21 of the solar power collecting unit 2. The telescopic rod member 57 may be in the form of a threaded rod member in other embodiments of this invention.

The supporting rods 58 are spaced apart from each other. Each of the supporting rods 58 has a lower end connected to the diskmember 53, and an upper end opposite to the lower end and connected pivotally to the carrier 21.

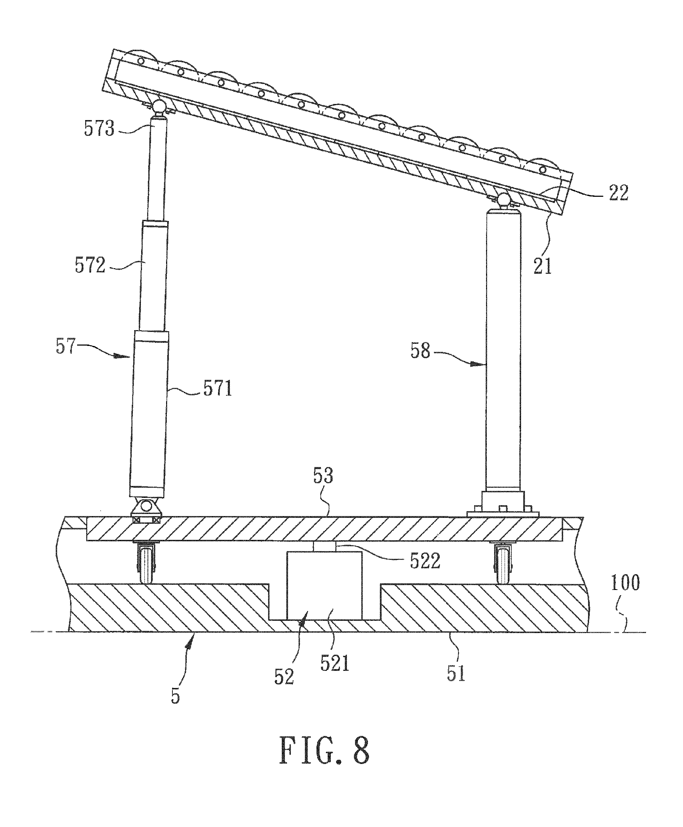

As best shown in Figure 5, the control module 6 includes a sensing unit 61 and a controller 62. The sensing unit 61 is disposed on the carrier 21 of the solar power collecting unit 2, and generates a sensing output indicating a solar radiating direction. The controller 62 is coupled to the sensing unit 61, the motor 521 of the drive unit 52, and the telescopic rod member 57. The controller 62 receives the sensing output from the sensing unit 61, and is operable to control the motor 521 of the drive unit 52 and the telescopic rod member 57 based on the sensing output received thereby such that the solar power collecting plate 22 is moved to face sunlight in response to rotation of the disk member 53 driven by the motor 521 of the drive unit 52 and adjustment in length of the telescopic rod member 57, as shown in Figures 2 and 8.

The cleaning device 7 includes a water spraying pipe 72 disposed to extend upright relative to the base 51, a water pump 74 coupled to the water spraying pipe 72 and operable to feed water to the water spraying pipe 72, an air spraying pipe 73 disposed to extend upright relative to the base 51 and spaced apart from the water spraying pipe 72, and an air pump 75 coupled to the air spraying pipe 73 and operable to feed air to the air spraying pipe 73. In this embodiment, the cleaning device 7 further includes a frame body 71 disposed on the top side of the base 51. Each of the water spraying pipe 72 and the air spraying pipe 73 has one end extending into the frame body 71, and includes at least one spray nozzle 721, 731 for spraying water or air therethrough. Each of the water pump 74 and the air pump 75 is disposed in the frame body 71.

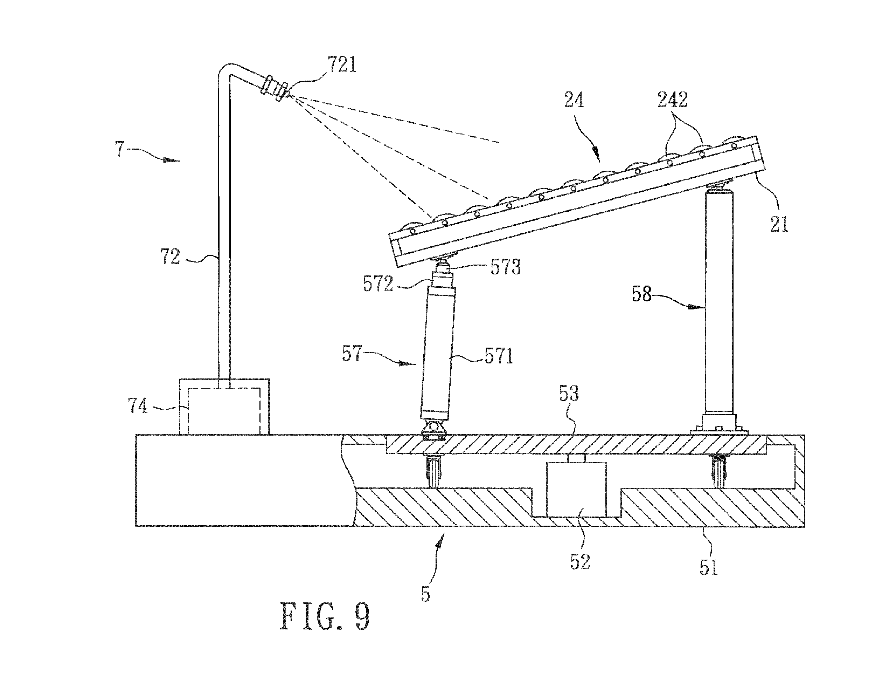

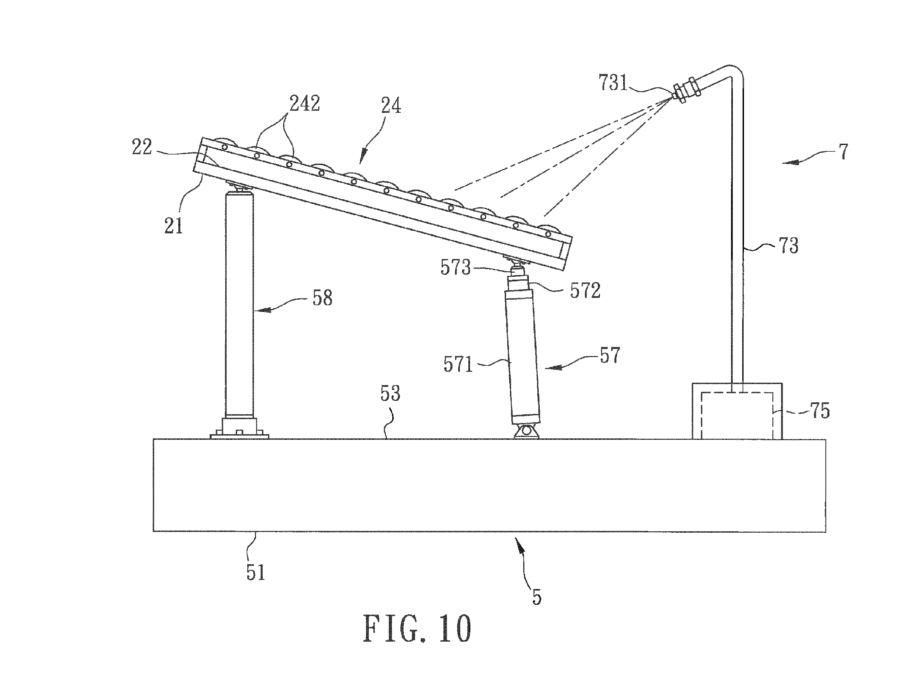

The water pump 74 and the air pump 75 are coupled electrically to and controlled by the controller 62 (see Figure 5) to spray water and air onto the solar power collecting unit 2 for cleaning the solar power collecting unit 2. As shown in Figure 9, the controller 62 may be configured to activate the water pump 74 at preset times for conducting a cleaning operation for the solar power collecting unit 2. During the cleaning operation, the disk member 53 may be driven to rotate by the drive unit 52 and the telescopic rod member 57 may be adjusted in length under the control of the controller 62, thereby moving the solar power collecting unit 2 such that the solar power collecting unit 2 inclines to face the nozzle 721 and such that water from the nozzle 721 may effectively remove dirt and stain on the solar power collecting unit 2. As shown in Figure 10, after cleaning the solar power collecting unit 2 with water, the controller 62 activates the air pump 75 for conducting a drying operation. That is, air flowing through the nozzle 731 is used to dry the solar power collecting unit 2.

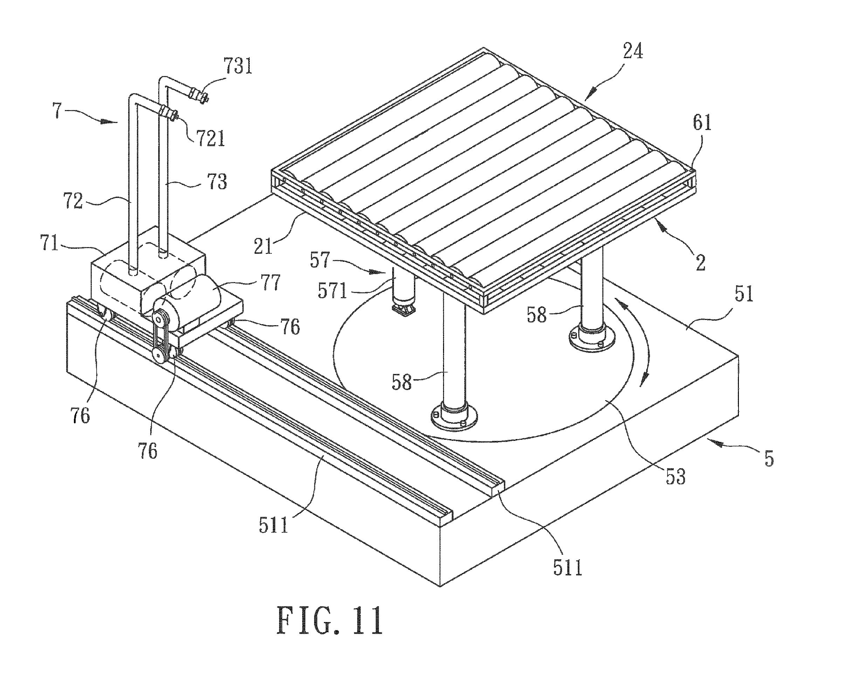

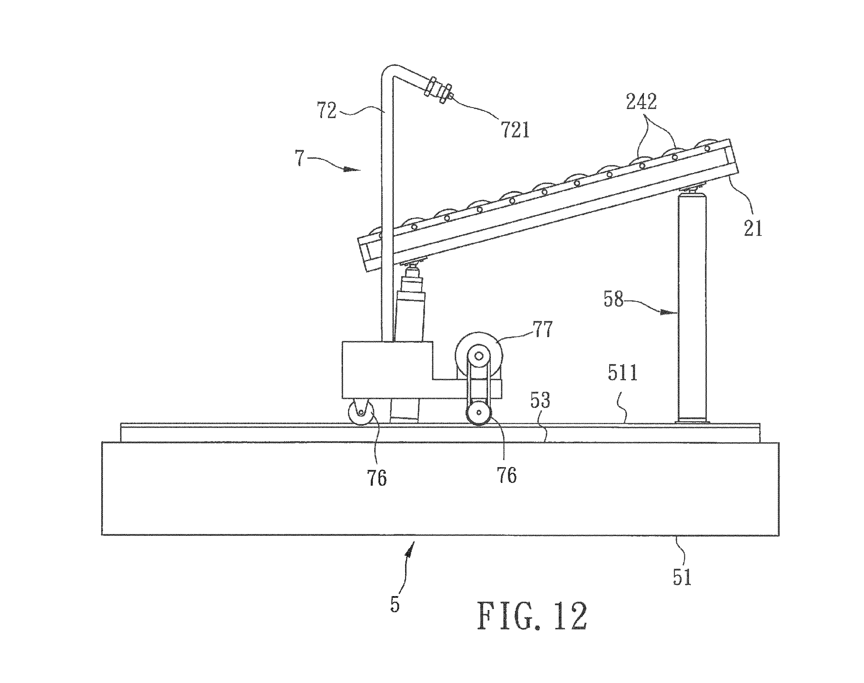

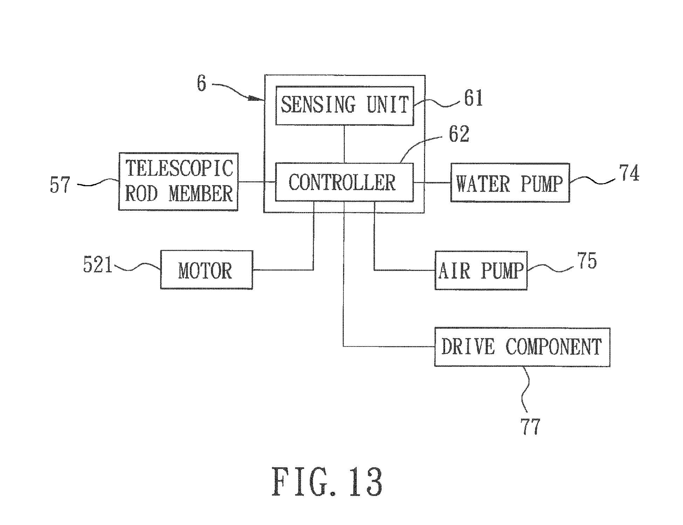

Figures 11, 12 and 13 illustrate the second preferred embodiment of an electricity generating apparatus using solar power according to this invention, which is a modification of the first preferred embodiment. In this embodiment, the top side of the base 51 is provided with a pair of parallel guide rails 511 disposed at one side of the disk member 53, and the cleaning device 7 further includes a plurality of wheels 76 mounted on a bottom side of the frame body 71 for moving along the guide rails 511, and a drive component 77 (such as a motor) coupled electrically to and controlled by the controller 62 for driving rotation of one of the wheels 76.

Accordingly, when one of the wheels 76 is driven to rotate by the drive component 77, the frame body 71 moves along the guide rails 511, and water and air from the nozzles 721, 731 are able to reach different parts of the solar power collecting unit 2 when cleaning the solar power collecting unit 2.

To sum up, due to the inclusion of the cleaning device 7, the electricity generating apparatus of this invention is provided with a self-cleaning function to effectively remove dirt and stain on the solar power collecting unit 2 such that solar power collecting efficiency of the solar power collecting unit 2 may be maintained.

## Claims

1. An electricity generating apparatus using solar power, including:
a solar power collecting unit (2) including
a carrier (21),
a solar power collecting plate (22) carried on said carrier (21) for converting solar power into electrical energy, and
a condensing unit (24) mounted on said carrier (21) and disposed above said solar power collecting plate (22) for concentrating sunlight onto said solar power collecting plate (22);
a supporting device (5) operable to support movably said solar power collecting unit (2) on a supporting surface (100), said supporting device (5) including
a base (51) adapted to be disposed on the supporting surface (100) and having a top side,
a disk member (53) mounted rotatably on said top side of said base (51) and rotatable relative to said base (51) about a rotation axis of said disk member (53) that is transverse to the supporting surface (100),
a drive unit (52) mounted to said base (51) for driving rotation of said disk member (53) about the rotation axis,
a telescopic rodmember (57) having opposite upper and lower pivot ends connected pivotally and respectively to said carrier (21) and said disk member (53), and
two upright supporting rods (58) spaced apart from each other, each of said supporting rods (58) having a lower end connected to said disk member (53), and an upper end opposite to said lower end and connected pivotally to said carrier (21); and
a control module (6) including
a sensing unit (61) for generating a sensing output indicating a solar radiating direction, and
a controller (62) coupled to said sensing unit (61), said drive unit (52) and said telescopic rod member (57), receiving the sensing output from said sensing unit (61), and operable to control said drive unit (52) and said telescopic rad member (57) based on the sensing output received thereby such that said disk member (53) is driven to rotate by said drive unit (52) and said telescopic rod member (57) is adjusted in length to move said solar power collecting plate (22) to face sunlight;
**characterized by** a cleaning device (7) including
a water spraying pipe (72) disposed to extend upright relative to said base (51),
a water pump (74) coupled to said water spraying pipe (72) and operable to feed water to said water spraying pipe (72),
an air spraying pipe (73) disposed to extend upright relative to said base (51) and spaced apart from said water spraying pipe (72), and
an air pump (75) coupled to said air spraying pipe (73) and operable to feed air to said air spraying pipe (73),
said water pump (74) and said air pump (75) being coupled electrically to and controlled by said controller (62) to spray water and air onto said solar power collecting unit (2) for cleaning said solar power collecting unit (2).

2. The electricity generating apparatus as claimed in Claim 1, **characterized in that** said cleaning device (7) further includes a frame body (71) disposed on said top side of said base (51), each of said water spraying pipe (72) and said air spraying pipe (73) having one end extending into said frame body (71), each of said water pump (74) and said air pump (75) being disposed in said frame body (71).

3. The electricity generating apparatus as claimed in 2, **characterized in that** said top side of said base (51) is provided with a pair of parallel guide rails (511) disposed at one side of said disk member (53), and said cleaning device (7) further includes a plurality of wheels (76) mounted on a bottom side of said frame body (71) for moving along said guide rails (511), and a drive component (77) coupled electrically to and controlled by said controller (62) for driving rotation of one of said wheels (76).

4. The electricity generating apparatus as claimed in any one of Claims 1 to 3, **characterized in that** each of said water spraying pipe (72) and said air spraying pipe (73) includes at least one spray nozzle (721, 731) for spraying water or air therethrough.

5. The electricity generating apparatus as claimed in any one of Claims 1 to 4, **characterized in that** said telescopic rod member (57) is one of a threaded rod member, a hydraulic cylinder and a pneumatic cylinder.

6. The electricity generating apparatus as claimed in any one of Claims 1 to 5, **characterized in that** said condensing unit (24) includes a plurality of condenser lenses (242) extending in a first direction, arranged in a second direction transverse to the first direction, and mounted rotatably on said carrier (21).

7. The electricity generating apparatus as claimed in Claim 6, **characterized in that** each of said condenser lenses (242) has a convex surface (2421), and a flat surface (2422) opposite said convex surface (2421) and facing said solar power collecting plate (22).

8. The electricity generating apparatus as claimed in any one of Claims 1 to 7, **characterized in that** said solar power collecting unit (2) further includes an energy storing member (23) connected electrically to said solar power collecting plate (22) for storing electrical energy therefrom.

9. The electricity generating apparatus as claimed in any one of Claims 1 to 8, **characterized in that** said drive unit (52) includes a motor (521) connected electrically to and controlled by said controller (62) of said control module (6), and having a drive shaft (522) extending along the rotation axis and coupled to said disk member (53).
